# EUROPEAN PATENT APPLICATION

(11) **EP 4 613 794 A1**
(43) Date of publication of application: **10.09.2025**
(21) Application number: 24161272.0
(22) Date of filing: 04.03.2024
(51) Int. Cl.: C08G 65/336, C08L 33/06, C08L 71/02

(54) **ONE-COMPONENT SILANE-TERMINATED POLYMER COMPOSITION WITH IMPROVED ADHESION ON OILY METAL SUBSTRATES**

(71) Applicant: Sika Technology AG, 6340 Baar (CH)
(72) Inventor: MARFINATI, Artur Campillos, Rochester Hills, 48307 (US); TABAKOVIC, Rifat, Rochester Hills, 48307 (US); WOLSCHLEGER, Leslie, Clarkston, 48348 (US); THÖNY, Debora, 8409 Winterthur (CH)
(74) Representative: Sika Patent Attorneys

(57) **Abstract**

The invention relates to one-component moisture curable composition comprising at least one organic polymer containing reactive silane groups, at least one organic polymer containing reactive silane groups and anone acrylate backbone, at least one surface-modified filler, at least one plasticizer comprising a polymer having a polyether backbone, at least one flame-retardant, at least one aminosilane and at least one catalyst.

The inventive composition is suitable as a gap-filler, sealant or adhesive, especially for batteries and electronic equipment. The one-component moisture curable composition shows excellent adhesion on oily metal surfaces, especially on oily aluminum surfaces.

## Description

### Technical Field

The invention relates to one-component moisture curable compositions based on silane terminated polymers and their use as a battery sealant.

### Prior Art

One-component compositions based on polymers containing reactive silane groups play an important role in many industrial applications, for example as adhesives, sealants or coatings. Polymers containing reactive silane groups are in particular organic polymers containing reactive silane groups, which are also referred to as "silane-functional polymers", "silane-modified polymers" (SMP) or "silane-terminated polymers" (STP). Compositions containing these polymers 15 harden via crosslinking reactions of the reactive silane groups on the polymers, which hydrolyze under the influence of moisture, condense with one another as silanol groups and thus form a covalently bonded network and, macroscopically, a cured material.

With the increasing use of batteries and electronic equipment nowadays, the demand for suitable adhesives and sealants in contact with these electronic elements or devices has risen significantly. Especially in electric automobile assembly, large batteries and a multitude of electronic parts require large amounts of such sealants and adhesives that cover, seal, or bond electronics and batteries directly.

A particular requirement for these adhesives and sealants is good adhesion to metal surfaces, in particular aluminum, even if they contain residual amounts of grease or oil, because of previous manufacturing steps. The adhesion on oily metal surfaces is challenging and often results in detrimental bond failures. Since this aspect has proven to be a severe problem for traditionally used adhesives and sealants, often a time- and energy-consuming pretreatment and cleaning of the metal surface is conducted prior to the application of said adhesives and sealants.

The current state of the art does not offer an easy solution to this problem. Currently, hardly any STP adhesive or sealant is known that can adequately bond and seal on oily metal surfaces, especially the ones occurring in the assembly of battery parts of electric vehicles. This is a critical problem to this young, but rapidly growing section of the automotive industry.

Thus, there is an increasing demand for adhesives or sealants with good adhesion on oily metal surfaces.

### Summary of the Invention

It is therefore an object of the present invention to provide a curable composition based on organic polymers containing reactive silane groups that is suitable as a gap-filler, sealant or adhesive, especially for batteries and electronic equipment, that shows adequate adhesion on oily metal surfaces. The present invention achieves these objects with the features of independent claim 1.

A one-component moisture curable composition comprising at least one organic polymer **P1** containing reactive silane groups and an acrylate backbone, comprising at least one organic polymer **P2** containing reactive silane groups and a polyether backbone, comprising at least one surface-modified filler **F,** comprising at least one plasticizer **PL** comprising a polymer having a polyether backbone, comprising at least one flame retardant **FR,** comprising at least one aminosilane **AS,** comprising at least one drying agent **D** and comprising at least one catalyst **C** is able to achieve the above objects.

Further aspects of the invention are the subject of further independent claims. Particularly preferred embodiments of the invention are the subject of the dependent claims.

### Ways of executing the invention

The present invention relates in a first aspect to a one-component composition comprising
- at least one organic polymer **P1** containing reactive silane groups and an polyether backbone;
- at least one organic polymer **P2** containing reactive silane groups and an acrylate backbone;
- at least one surface-modified filler **F;**
- at least one plasticizer **PL** comprising a polymer having a polyether backbone;
- at least one flame retardant **FR;**
- at least one aminosilane **AS;**
- at least one drying agent **D;**
- at least one catalyst **C.**

The term "polymer" in the present document includes, on one hand, a collection of macromolecules that are uniform chemically but differ with respect to the degree of polymerization, the molecular weight and the chain length and were synthesized by a polyreaction (polymerization, polyaddition, polycondensation). On the other hand, this term also includes derivatives of such a group of macromolecules of polyreactions, i.e., compounds obtained by reactions, such as additions or substitutions of functional groups on given macromolecules and they may be chemically uniform or chemically heterogeneous. This term also includes so-called prepolymers, i.e., reactive oligomeric preadducts, whose functional groups are involved in the synthesis of macromolecules.

The term "organic polymer" encompasses a collective of macromolecules that are chemically homogeneous but differ in relation to degree of polymerization, molar mass and chain length, which has been prepared by a poly reaction (polymerization, polyaddition, polycondensation) and has a majority of carbon atoms in the polymer backbone, and reaction products of such a collective of macromolecules. Polymers having a polyorganosiloxane backbone (commonly referred to as "silicones") are not organic polymers in the context of the present document.

Substance names beginning with "poly", such as polyol or polyisocyanate, refer to substances containing, in a formal sense, two or more of the functional groups that occur in their name per molecule.

The term "radical" is used in this document in a formal sense, meaning a molecular rest bound to an atom by a covalent bond, while the bond is formally "cut" to describe the molecular rest attached to it.

The term "silane" or "organosilane" refers to compounds which on the one hand have at least one, customarily two or three, hydrolyzable groups, preferably alkoxy groups or acyloxy groups, bonded directly to the silicon atom via Si-O bonds, and on the other hand have at least one organic radical bonded directly to the silicon atom via an Si-C bond. Silanes having alkoxy groups or acyloxy groups are also known to the person skilled in the art as organoalkoxy silanes and organoacyloxy silanes, respectively.

Correspondingly, the term "silane group" identifies the silicon-containing group bonded to the organic radical of the silane, which is bonded by the Si-C bond to a compound. The silanes and their silane groups have the property of undergoing hydrolysis in the event of contact with moisture. This produces organosilanols, i.e., silicon-organic compounds containing one or more silanol groups (Si-OH groups) and, through subsequent condensation reactions, organosiloxanes, in other words silicon-organic compounds containing one or more siloxane groups (Si-O-Si groups).

In the present document, the term "reactive silane group" refers to a silyl group that is bonded to an organic radical and has one to three, especially two or three, hydrolyzable substituents or hydroxyl groups on the silicon atom. Particularly useful hydrolyzable substituents are alkoxy groups. These silane groups are also referred to as "alkoxysilane groups". Reactive silane groups may also be in partly or fully hydrolyzed form, for example as silanols.

The term "silane-functional" identifies compounds which have silane groups. "Silane-functional polymers", accordingly, are polymers, more particularly organic polymers, which have at least one, preferably two or more, e.g., two, silane groups. The silane groups may take the form of side groups or, preferably end groups. Silane-functional polymers are also referred to as silane-terminated polymers (STP). γ-silane-functional polymers are polymers in which the Si atom of the silane group is linked to the polymer via a 1,3-propylene bridge.

"Organofunctional compound" refers to a compound that contains a functional group that is bound via a carbon atom. For example, "aminofunctional compound" is a compound having an aminoalkyl group.

"Hydroxysilane", "isocyanatosilane", "aminosilane" and "mercaptosilane" refer respectively to organoalkoxysilanes having one or more hydroxyl, isocyanato, amino or mercapto groups on the organic radical in addition to the silane group.

"Primary amino group" refers to an NH₂ group that is bonded to an organic radical, and "secondary amino group" refers to an NH group that is bonded to two organic radicals which may also together be part of a ring, and "tertiary amino group" refers to an N group that is bonded to three organic radicals, two or three of which together may also be part of one or more rings.

Accordingly, "primary aminosilanes" are aminosilanes comprising a primary amino group and "secondary aminosilanes" are aminosilanes comprising a secondary amino group. The latter also encompasses compounds having both a primary and a secondary amino group.

The term "polyether backbone" includes all repeat units in the polymer that are derived from a polyoxyalkylene structure, in particular linear or branched hydrocarbons which contain ether groups and contain more than two repeat units of the (O-R) type in succession, where R is a linear or branched alkylene radical, as for example from the polyaddition of ethylene oxide or 1,2-propylene oxide onto starter molecules having two active hydrogen atoms.

The term "acrylate backbone" includes all repeat units in the polymer that are derived from radically polymerizable (meth)acrylate monomers.

The term "polyethers containing reactive silane groups" also encompasses organic polymers which contain silane groups and which, in addition to polyether units, may also contain urethane groups, urea groups or thiourethane groups.

The term "polyurethane polymer" includes all polymers synthesized by the so-called diisocyanate polyaddition process. This also includes polymers which are almost or entirely free of urethane groups. Examples of polyurethane polymers include polyether polyurethanes, polyester polyurethanes, polyether polyureas, polyureas, polyester polyureas, polyisocyanurates and polycarbodiimides.

"Plasticizer" refers to nonvolatile substances that are not chemically incorporated into the polymer in the course of curing and that exert a plasticizing effect on the cured polymer.

"Surface-modification" or "surface-coating" or "surface-treatment" refers to the process of altering the surface of a compound and improve its material characteristics. Typically, such a modification changes the compound from hydrophilic to hydrophobic or vice versa and/or improves the dispersion and compatibility characteristics of the compound.

The compositions comprising the silane-functional polymer are "moisture-curing", meaning that in the presence of water or moisture, more particularly atmospheric moisture the above-described hydrolysis and condensation reactions on the silane groups take place, causing crosslinking of the polymer molecules and curing of the composition. The curing is also referred to as crosslinking.

"Molecular weight" is understood in the present document to mean the molar mass (in grams per mole) of a molecule or a molecule residue.

"Average molecular weight" is understood herein to mean the number-average Mₙ of an oligomeric or polymeric mixture of molecules or radicals, which is typically determined by means of gel permeation chromatography (GPC) against polystyrene as standard especially with tetrahydrofuran as mobile phase, refractive index detector and evaluation from 200 g/mol.

"Weight percent" or "percentage by weight", and its abbreviation "wt.-%" refer to the weight percentage of a certain compound in a total composition, if not otherwise defined.

The terms "weight" and "mass" are used interchangeably in this document and refer to the mass as a property of a physical body and commonly measured in kilograms (kg).

"Storage-stable" or "storable" refers to a substance or composition when it can be stored at room temperature in a suitable container over a prolonged period, typically at least 3 months up to 6 months or more, without any change in its application or use properties, especially in the viscosity and crosslinking rate, to a degree of relevance for the use thereof as a result of the storage.

A dotted or dashed line in the formulae in this document in each case represents the bond between a substituent and the corresponding molecular radical.

"Room temperature" refers here to a temperature of 23°C.

The term "standard climatic conditions" refers to a temperature of 23±1 °C and a relative air humidity of 50±5%.

All industrial standards and norms cited in this document refer to the respective edition in force on the time of filing of the first application of this invention, if not otherwise defined.

The composition according to the invention comprises at least one organic polymer **P1** containing reactive terminal silane groups and a polyether backbone.

Preferably, the organic polymer **P1** is free of isocyanate groups. It is liquid, in particular at room temperature.

The organic polymer **P1** preferably has silane groups of formula (I) 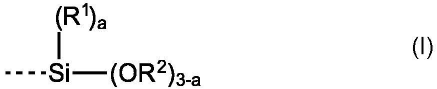 wherein
R¹ is a linear or branched, monovalent hydrocarbyl radical having 1 to 8 carbon atoms;
R² is a linear or branched, monovalent hydrocarbyl radical having 1 to 10 carbon atoms and which optionally contains one or more C-C multiple bonds, and/or cycloaliphatic, and/or aromatic moieties,
a is 0, 1 or 2, especially 0 or 1.

Preferably, R¹ is methyl or ethyl.

Preferably, R² is methyl or ethyl or isopropyl.

More preferably, R² is methyl. Polymers of this kind containing silane groups are particularly reactive.

Also more preferably, R² is ethyl. Such polymers containing silane groups are particularly storage-stable and toxicologically advantageous.

Aside from the silane groups of formula (I), the organic polymer **P1** preferably has no further silane groups that do not correspond to the formula (I). In particular, it has no isocyanate groups attached directly to the polyether triol via an isocyanatosilane. Such silane groups attached via isocyanatosilane decrease strength and thermal stability after curing.

Preferably, the organic polymer **P1** has an average of 1.5 to 4, more preferably 1.8 to 3.4, silane groups per molecule.

Preferably, the organic polymer **P1** has an average molecular weight Mₙ within a range from 5'000 to 30'000 g/mol, preferably 6'000 to 20'000 g/mol, especially 7'000 to 15'000 g/mol.

Preferably, the composition according to the precent invention comprises, based on the total composition, between 5 and 20 wt.-%, preferably 10 and 15 wt.-% of organic polymer **P1.**

In a preferred embodiment, the one-component composition comprises an organic polymer **P1** containing reactive silane groups and a polyether backbone, wherein the backbone of the organic polymer **P1** is a polyether, in particular a polyoxyethylene, polyoxypropylene or polyoxy-propylenepolyoxyethlyene, a polyurethane, a poly(meth)acrylate, or a polybutadiene.

The composition according to the invention comprises at least one organic polymer **P2** containing reactive terminal silane groups and an acrylate backbone.

Preferably, the organic polymer **P2** is free of isocyanate groups. It is liquid, in particular at room temperature.

The organic polymer **P2** preferably has silane groups of formula (I) as described above.

Aside from the silane groups of formula (I), the organic polymer **P2** preferably has no further silane groups that do not correspond to the formula (I). In particular, it has no isocyanate groups attached directly to the polyether triol via an isocyanatosilane. Such silane groups attached via isocyanatosilane decrease strength and thermal stability after curing.

Preferably, the organic polymer **P2** has an average of 1.5 to 4, more preferably 1.8 to 3.4, silane groups per molecule.

Preferably, the organic polymer **P2** has an average molecular weight Mₙ within a range from 5'000 to 30'000 g/mol, preferably 6'000 to 20'000 g/mol, especially 7'000 to 15'000 g/mol.

Preferably, the composition according to the precent invention comprises, based on the total composition, between 5 and 20 wt.-%, preferably 10 and 15 wt.-% of organic polymer **P2.**

In a preferred embodiment, the one-component composition comprises an organic polymer **P2** containing reactive silane groups and an acrylate backbone, wherein the backbone of the organic polymer **P2** is derived from radically polymerizable (meth)acrylate monomers.

Processes for preparing organic polymers **P1** or **P2** containing reactive silane groups are known to the person skilled in the art.

In a preferred process, organic polymers **P1** containing reactive silane groups are obtainable from the reaction of organic polymers containing allyl groups with hydrosilanes, optionally with chain extension using, for example, diisocyanates.

In a further preferred process, organic polymers **P1** containing reactive silane groups are obtainable from the copolymerization of alkylene oxides and epoxysilanes, optionally with chain extension using, for example, diisocyanates.

In a further preferred process, organic polymers **P1** containing reactive silane groups are obtainable from the reaction of organic polyols with isocyanatosilanes, optionally with chain extension using diisocyanates.

In a further preferred process, organic polymers **P1** containing reactive silane groups are obtainable from the reaction of organic polymers containing isocyanate groups, especially NCO-terminated urethane polymers from the reaction of polyols with a superstoichiometric amount of polyisocyanates, with organoalkoxysilanes such as aminosilanes, hydroxysilanes or mercaptosilanes. This process enables the use of a multitude of inexpensive starting materials of good commercial availability, by means of which it is possible to obtain different polymer properties, for example high extensibility, high strength, low modulus of elasticity, low glass transition point or high weathering resistance.

In a preferred process, organic polymers **P2** containing reactive silane groups are obtainable from the successive addition of (meth)acrylate monomers through their vinylogous double bond. This results in a chain-growth polymerization. The most common method of chain-growth polymerization, free-radical polymerization (FRP) involves separate initiator molecules, which start the reaction.

In a preferred embodiment, the one-component composition comprises an organic polymer **P2** containing reactive silane groups and an acrylate backbone, wherein the backbone of the organic polymer **P2** is derived from radically polymerizable (meth)acrylate, in particular an alkyl(meth)acrylate, preferably a methyl(meth)acrylate, a (meth)acrylate or ethylene oxide adducts of (meth)acrylic acid. such as alkyl(meth)acrylate monomers, in particular methyl(meth)acrylate, ethyl (meth)acrylate, n-propyl(meth)acrylate, isopropyl (meth)acrylate, n-butyl(meth)acrylate, isobutyl (meth)acrylate, s-butyl(meth)acrylate, tert-butyl (meth)acrylate, neopentyl(meth)acrylate, n-hexyl(meth)acrylate, n-heptyl(meth)acrylate, 2-ethylhexyl (meth)acrylate, nonyl(meth)acrylate, decyl(meth)acrylate, undecyl(meth)acrylate, lauryl(meth)acrylate, tridecyl (meth)acrylate, tetradecyl(meth)acrylate, hexadecyl (meth)acrylate, stearyl(meth)acrylate, behenyl(meth)acrylate, and cyclohexyl(meth)acrylate; and (meth)acrylate monomers, in particular 2-methoxyethyl (meth)acrylate, 3-methoxybutyl(meth)acrylate, 2-hydroxyethyl(meth)acrylate, 2-hydroxypropyl(meth)acrylate, ethylene oxide adducts of (meth)acrylic acid, 2,2,2-trifluoroethyl(meth)acrylate, 3,3,3-trifluoropropyl(meth)acrylate, 3,3,4,4,4-pentafluorobutyl(meth)acrylate, 2-perfluoroethyl-2-perfluorobutylethyl(meth)acrylate, trifluoromethyl(meth)acrylate, perfluoroethyl (meth)acrylate, bis(trifluoromethyl)methyl(meth)acrylate, 2-trifluoromethyl-2-perfluoroethylethyl(meth)acrylate, 2-perfluorohexylethyl(meth)acrylate, 2-perfluorodecylethyl (meth)acrylate, 2-perfluorohexadecylethyl(meth)acrylate, dimethylaminoethyl(meth)acrylate, chloroethyl (meth)acrylate, tetrahydrofurfuryl(meth)acrylate, and glycidyl(meth)acrylate. Especially preferred are 2-ethylhexyl (meth)acrylate and (meth)acrylic acid. Further suitable acrylate monomers are acrylamides or acrylonitriles. These monomers may be used alone or in combination or also in combination with other vinylogous non-acrylic monomers such as styrene or 1,3-butadiene.

The organoalkoxysilane for the reaction with the intermediate polymer containing isocyanate groups is preferably according to formula (II). 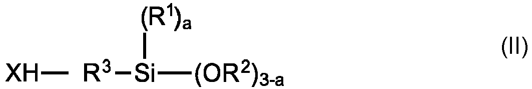 wherein
R¹ is a linear or branched, monovalent hydrocarbyl radical having 1 to 8 carbon atoms;
R² is a linear or branched, monovalent hydrocarbyl radical having 1 to 10 carbon atoms and which optionally contains one or more C-C multiple bonds, and/or cycloaliphatic, and/or aromatic moieties,
R³ is a divalent hydrocarbyl radical having 1 to 12 carbon atoms that optionally has one or more C-C multiple bonds, cyclic and/or aromatic moieties and optionally one or more heteroatoms, especially an amido, carbamate or morpholino group;
X is O, S or NR⁴ where R⁴ is H or a monovalent hydrocarbyl radical having 1 to 20 carbon atoms that optionally has heteroatoms in the form of alkoxysilyl, ether or carboxylic ester groups.
a is 0, 1 or 2, especially 0 or 1.

Preferably, R¹ is methyl or ethyl.

Preferably, R² is methyl or ethyl or isopropyl.

More preferably, R² is methyl. Polymers of this kind containing silane groups are particularly reactive.

Also more preferably, R² is ethyl. Such polymers containing silane groups are particularly storage-stable and toxicologically advantageous.

The organic polymer **P1** or **P2** containing reactive terminal silane groups is storage-stable with exclusion of moisture.

The organic polymers **P1** and **P2** can be either stored separately or pre-mixed. Pre-mixed **P1** and **P2** can be found in commercial products such as MA490 from Kaneka. MA 490 is a mixture of **P1** dimethoxy(methyl) silane-functional polymer with polyether backbones and **P2** trimethoxy silane-functional polymer with 2-ethylhexylacrylat (98%) backbone and acrylic acid backbone (2%).

The composition according to the invention comprises at least one surface-modified filler **F.** Suitable fillers **F** are all compounds that are commonly used as fillers in compositions based on silane-functional polymers. Suitable fillers **F** are especially chalk, such as precipitated calcium carbonates (PCC) or ground calcium carbonates (GCC), barytes, quartz flours, quartz sands, dolomites, wollastonites, calcined kaolins, sheet silicates, such as mica or talc, zeolites, aluminum hydroxides, magnesium hydroxides, silicas, including finely divided silicas from pyrolysis processes, cements, gypsums, fly ashes, industrially produced carbon blacks, graphite, metal powders, for example of aluminum, copper, iron, silver or steel, PVC powders or hollow beads. Especially preferred is surface-modified PCC and/or GCC.

Common surface modifiers for fillers **F,** in particular chalk are surfactants, coupling agents, polymer modifiers, and other commonly used surfaces modifiers. Especially preferred surface modifications of fillers **F,** in particular calcium carbonates such as PCC and GCC include coating with fatty acids such as stearates or with phosphates or with quaternary ammonium salts or with organosilanes. Preferably, the surface modification leads to a hydrophobization of the filler surface, which is preferably achieved by coating with a fatty acid, for example stearate, or by coating with an organosilane having non-hydrolyzable alkyl groups.

In a preferred embodiment, the one-component composition according to the invention comprises a filler **F** consisting of surface-modified calcium carbonate, in particular a surface-modified precipitated calcium carbonate (PCC) or surface-modified ground calcium carbonate (GCC).

The composition according to the present invention comprises preferably between 25 and 55 wt.-%, more preferably between 30 and 50 wt.-%, most preferably between 30 and 40 wt.-%, based on the total composition, of at least one surface-modified filler **F.**

The composition according to the invention comprises at least on plasticizer **PL** comprising a polymer having a polyether backbone. Especially suitable as plasticizers **PL** comprising a polymer having a polyether backbone are polyols such as polyether polyols or polyester polyols, glycol ethers, glycol esters, polyether mono- or polyols having blocked hydroxyl groups, especially in the form of acetate groups, isocyanates, organic phosphoric or sulfonic esters.

Other plasticizers that can be present optionally are all compounds that are commonly used as plasticizers in compositions based on silane-functional polymers, such as phthalates and/or terephthalates, hydrogenated phthalates and/or hydrogenated terephthalates, trimellitates, adipates, azelates, sebacates, benzoates.

In a preferred embodiment the one-component composition according to the invention comprises a plasticizer **PL** consisting of a polyether polyol, in particular a propylene glycol-initiated homopolymer diol.

The composition according to the present invention comprises preferably between 1 and 20 wt.-%, more preferably between 2 and 15 wt.-%, most preferably between 3 and 10 wt.-%, based on the total composition, of at least one plasticizer **PL.**

The composition according to the invention comprises at least one flame retardant **FR.** Suitable as flame retardants are the already mentioned fillers aluminum hydroxide, magnesium hydroxide, or, especially organophosphorus compounds such as organic phosphoric esters such as, in particular, triethyl phosphate, tricresyl phosphate, triphenyl phosphate, diphenyl cresyl phosphate, isodecyl diphenyl phosphate, tris(1,3-dichloro-2-propyl) phosphate, tris(2-chloroethyl) phosphate, tris(2-ethylhexyl) phosphate, tris(chloroisopropyl) phosphate, tris(chloropropyl) phosphate, isopropylated triphenyl phosphate, mono-, bis- or tris(isopropylphenyl) phosphates of different degrees of isopropylation, resorcinol bis(diphenyl phosphate), bisphenol A bis(diphenyl phosphate) or ammonium polyphosphates. Preferred are trialkyl and/or triaryl phosphate flame retardants **FR** such as tris-(2-ethylhexyl)-phosphate (sold under the trade name Disflamoll^{®} TOF by Lanxess), cresyl diphenyl phosphate, tricresyl phosphate, and triphenyl phosphate (all sold under the trade name range Disflamoll^{®} by Lanxess).

In a preferred embodiment the one-component composition according to the invention comprises a flame retardant **FR** consisting of an organophosphorus compound, especially an trialkyl and/or triaryl phosphate.

The composition according to the present invention comprises between preferably 5 and 45 wt.-%, more preferably between 10 and 40 wt.-%, most preferably between 15 and 35 wt.-%, based on the total composition, of at least one flame retardant **FR.**

The composition according to the invention comprises at least one aminosilane **AS.** Aminosilanes have various advantages, some exhibit co-catalytic activity, in particular aminosilanes such as 3-aminopropyl trimethoxysilane, and/or they act as adhesion promotors, such as 3-glycidoxypropyl trimethoxysilane.

In a preferred embodiment the one-component composition according to the invention comprises an aminosilane **AS** according to the formula (III) 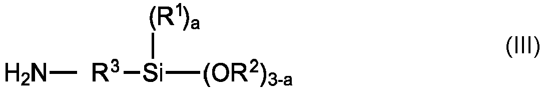 wherein
R¹ is a linear or branched, monovalent hydrocarbyl radical having 1 to 8 carbon atoms;
R² is a linear or branched, monovalent hydrocarbyl radical having 1 to 10 carbon atoms and which optionally contains one or more C-C multiple bonds, and/or cycloaliphatic, and/or aromatic moieties;
R³ is a divalent hydrocarbyl radical having 1 to 12 carbon atoms that optionally has one or more C-C multiple bonds, cyclic and/or aromatic moieties and optionally one or more heteroatoms, especially an amido, carbamate or morpholino group;
a is 0, 1 or 2, especially 0 or 1.

Preferably, R¹ is methyl or ethyl.

The composition according to the present invention comprises preferably between 0.5 and 10 wt.-%, more preferably between 1 and 5 wt.-%, most preferably between 1 and 3 wt.-%, based on the total composition, of at least one aminosilane **AS.**

The composition according to the invention comprises at least one drying agent **D.** Without the drying agent premature curing is observed, because of the adsorbed water stored in the filler. Suitable as drying agents are organoalkoxysilanes, orthoformic esters, calcium oxides or molecular sieves.

In a preferred embodiment the one-component composition comprises a drying agent **D** consisting of an organoalkoxysilane, especially vinyltrimethoxysilane (VTML), tetraethoxysilane (TEOS), vinyltriethoxysilane (VTEO), propyltrimethoxysilane (PTMO), octyltrimethoxysilane (OCTMO), phenyltrimethoxysilane (PhTMO) or an organoalkoxysilane having a functional group in the α-position to the silane group, especially N-(methyldimethoxysilylmethyl)-O-methylcarbamate, (methacryloyloxymethyl)silane, and methoxymethylsilane.

The composition according to the present invention comprises preferably between 0.5 and 10 wt.-%, more preferably between 1 and 5 wt.-%, most preferably between 1 and 2 wt.-%, based on the total composition, of at least one drying agent **D.**

The composition according to the invention comprises at least one catalyst **C** for the curing of silane-functional polymers. The addition of catalyst is advantageous to ensure a sufficient curing rate given the fact that low amounts of reactive polymers are used. Suitable catalysts are especially metal compounds and/or basic nitrogen or phosphorus compounds.

Suitable metal compounds are especially compounds of tin, titanium, zirconium, aluminum or zinc, especially diorganotin(IV) compounds such as, in particular, dibutyltin(IV) diacetate, dibutyltin(IV) dilaurate (DBTL), dibutyltin(IV) dineodecanoate or dibutyltin(IV) bis(acetylacetonate) and dioctyltin(IV) dilaurate (DOTL), and also titanium(IV) or zirconium(IV) or aluminum(III) or zinc(II) complexes, especially with alkoxy, carboxylate, 1,3-diketonate, 1,3-ketoesterate or 1,3-ketoamidate ligands.

Suitable basic nitrogen or phosphorus compounds are especially imidazoles, pyridines, phosphazene bases, secondary or tertiary amines, hexahydrotriazines, biguanides, guanidines, or amidines.

Nitrogen-containing compounds suitable as catalysts are in particular amines, especially N-ethyl-diisopropylamine, N,N,N',N'-tetramethylalkylenediamines, 1,4-diazabicyclo[2.2.2]octane; amidines such as especially 1,8-diazabicyclo[5.4.0]undec-7-ene (DBU), 1,5-diazabicyclo[4.3.0]non-5-ene (DBN), 6-dibutylamino1,8-diazabicyclo-[5.4.0]undec-7-ene; guanidines such as especially tetramethylguanidine, 2-guanidino-benzimidazole, acetylacetone-guanidine, 3-di-o-tolyl-guanidine, 2-tert-butyl-1,1,3,3-tetramethyl guanidine; and imidazoles, in particular N-(3-trimethoxysilylpropyl)-4,5-dihydroimidazole and N-(3-triethoxysilylpropyl)-4,5-dihydroimidazole.

In a preferred embodiment the one-component composition comprises a catalyst **C** consisting of a tin-based catalyst, especially a diorganotin compound such as dibutyltin dilaurate (DBTL) or dioctyltin dilaurate (DOTL) or a zinc(II) complex with 1,3-diketonate ligands.

The composition according to the present invention comprises preferably between 0.001 and 1 wt.-%, more preferably between 0.01 and 0.1 wt.-%, most preferably between 0.06 and 0.08 wt.-%, based on the total composition, of at least one catalyst **C.**

Furthermore, the composition according to the invention may optionally comprise at least one stabilizer **S.** Stabilizers are advantageous to the composition because they minimize polymer degradation as well as prevent discoloration of the polymer. Preferred stabilizers are hindered amine light stabilizers (HALS) that act as free radical scavengers that can be purchased as Chimassorb^{®} from BASF. Further preferred stabilizers are antioxidants such as phenols, especially hindered phenols.

In a preferred embodiment the one-component composition comprises stabilizers **S,** especially hindered amine light stabilizers (HALS) and/or antioxidants, preferably hindered phenols.

The composition according to the present invention comprises between 0 and 2 wt.-%, preferably between 0.01 and 1 wt.-%, in particular between 0.1 and 0.5 wt.-%, based on the total composition, of at least one stabilizer **S.**

Furthermore, the composition according to the invention may optionally comprise at least one additive **A.** Such additives are for example rheological additives, solvents, fibers, thixotropic agents, dyes, pigments, mineral oils, flow control agents, dearating agents, defoamers, biocides, fungicides and also other substances customarily used in moisture-curing compositions.

Examples for pigments and colorants are especially inorganic or organic pigments, in particular titanium dioxide, iron oxides and chromium oxides.

In a preferred embodiment the one-component composition comprises additives **A,** especially pigments.

The composition according to the present invention comprises between 0 and 6 wt.-%, preferably between 1 and 5 wt.-%, in particular between 2 and 4 wt.- %, based on the total composition, of at least one additive **A.**

Furthermore, the compositions disclosed herein have excellent flammability properties. The cured one-component composition according to the invention passes the flammability test according to US standard UL 94 and reaches classification V1. This means that burning stops within 30 seconds on a vertical specimen; drips of particles allowed as long as they are not inflamed.

Another aspect of the present invention is the use of the one-component composition as described herein to adhesively bond, coat, or seal substrates. In a preferred embodiment, the one-component composition according to the invention is used as an automotive sealant, more particularly as sealant for electric vehicles, more particularly for batteries or parts of batteries in electric vehicles.

The use of the composition gives rise to an article that was bonded, sealed, or coated with the composition. Manufactured Articles are any physical objects, to which the disclosed one-component composition was added during production of said physical objects. The article is especially an industrially manufactured good or a consumable good, especially a domestic appliance or a mode of transport such as, more particularly, an automobile, a bus, a truck, a rail vehicle, a ship, an aircraft, a drone, or a helicopter; or the article may be an installable component thereof. An especially preferred article is an automobile, especially an electric vehicle and the battery component thereof.

Another aspect of the present invention is thus the article that was bonded, sealed or coated with the one-component composition according to the invention, especially a vehicle or part of a vehicle, especially an electric vehicle, in particular a battery or parts of a battery in an electric vehicle.

On application, the composition is preferably applied to at least one substrate. Suitable substrates are especially
- glass, glass ceramic, concrete, mortar, brick, tile, gypsum and natural rocks such as limestone, granite or marble;
- metals and alloys such as aluminum, iron, steel and nonferrous metals, and also surface-finished metals and alloys such as galvanized or chromed metals or surface coated metals, such as Kynar^{®}- or Duranar^{®}-coated aluminum;
- leather, textiles, paper, wood, woodbase materials bonded with resins, for example phenolic, melamine or epoxy resins, resin-textile composites and further polymer composites;
- plastics such as polyvinyl chloride (rigid and flexible PVC), acrylonitrile-butadiene-styrene copolymers (ABS), polycarbonate (PC), polyamide (PA), polyesters, poly(methyl methacrylate) (PMMA), epoxy resins, polyurethanes (PUR), polyoxymethylene (POM), polyolefins (PO), polyethylene (PE) or polypropylene (PP), ethylene/propylene copolymers (EPM) and ethylene/propylene/diene terpolymers (EPDM), and also fiber-reinforced plastics such as carbon fiber-reinforced plastics (CFP), glass fiber-reinforced plastics (GFP) and sheet molding compounds (SMC), where the plastics may have been surface-treated by means of plasma, corona or flames;
- coated substrates such as powder-coated metals or alloys;
- electrocoated (e-coat) surfaces coated by electrophoretic painting processes;
- paints or varnishes, especially automotive topcoats.

Another aspect of the present invention is thus the use of the composition on a substrate, to adhesively seal, coat, or bond said substrate by the composition described herein. It is possible to bond or seal one or two or more identical or different substrates. In general, it is not required to pre-treat the surfaces prior to application of the composition. The composition shows in preferred embodiments an excellent adhesion profile on a large variety of unprimed, non-pretreated, and even uncleaned materials. The composition shows in preferred embodiments an excellent adhesion profile on metal surfaces, preferably on aluminum surfaces, especially on oily aluminum surfaces.

An especially preferred embodiment of a one-component moisture curable composition according to the present invention comprises
- 5-20 wt.-% of organic polymer **P1;**
- 5 - 20 wt.-% of organic polymer **P2;**
- 30 - 50 wt.-% of surface-modified filler **F;**
- 10 - 40 wt.-% of flame retardant **FR;**
- 2 - 15 wt.-% of plasticizer **PL;**
- 1 - 5 wt.-% of aminosilane **AS;**
- 1 - 5 wt.-% of drying agent **D;**
- 0.01 - 0.1 wt.-% of catalyst **C;**

### Examples

Adduced hereinafter are working examples which are intended to elucidate the invention described in detail. It will be appreciated that the invention is not restricted to these described working examples. The term "standard climatic conditions" refers to a temperature of 23±1°C and a relative air humidity of 50±5%.

### Synthesis of reference organic polymer RP

Under moisture exclusion, 3'000 g polyoxypropylene diol (Polyol Acclaim^{®} 12200 from Covestro, molecular weight 10'000 g/mol, OH number 11.2 mg KOH/g), 155 g isophorone diisocyanate (Vestanat^{®} IPDI from Evonik Industries), 414 g diisodecyl phthalate (DIDP) and 0.42 g dibutyltin dilaurate (DBTL) were heated to 90°C with constant stirring and left at this temperature to give a polyurethan prepolymer terminated by isocyanate groups with the titrimetrically determined content of free isocyanate groups of 0.8 wt.-%. Subsequently, 242 g diethyl N-(3-trimethoxysilylpropyl)aminosuccinate was added to the reaction vessel. The total consumption of the isocyanate groups was checked by IR spectroscopy. The silane-functional polymer **RP** was cooled to room temperature and stored under exclusion of moisture.

### Test method for exemplary compositions:

**Adhesion** was measured qualitatively on a precipitation-hardened aluminum alloy (according to UNS A96061) coated with Alodine^{®}. Then, corrosion-preventive oils commonly used at OEM facilities (e.g. Ferrocote^{®} EGL-1) were dispersed on the aluminum surface in two different amounts, namely 1.5 g/m² and 3 g/m². The composition was then applied in beads in the following dimension: 15 mm width, 4 mm height, 100 mm length. The beads were left to fully cure for 7 days at standard climatic conditions. Then, the beads were cut underneath with a stylus and peeled off with pliers from the aluminum surface. The adhesion was evaluated by eye and according to the following codes (totaling 100%):

| | |
|---|---|
| Good: | 80-100% cohesive failure, and 0-20% adhesive failure |
| Medium: | 20-80% cohesive failure and 20-80% adhesive failure |
| Bad: | 0-20% cohesive failure and 80-100% adhesive failure |

### Compounds used in Compositions

**Table 1: Compounds used for the example compositions.**

| **Name** | **Description** | **Trade name** |
|---|---|---|
| Reference Organic Polymer **RP** | Trimethoxy silane-functional polymer with polyether backbone | - |
| Organic Polymer **P** | Mixture of **P1** dimethoxy(methyl) silane-functional polymer with polyether backbones and **P2** trimethoxy silane-functional polymer with 2-ethylhexylacrylat (98%) backbone and acrylic acid backbone (2%) | Silyl MA490 (Kaneka) |
| Filler **F1** | Surface-modified (hydrophobized) ground calcium carbonate (GCC) | Omyacarb^{®} UFT (Omya) |
| Filler **F2** | Non-surface-modified precipitated calcium carbonate (PCC) | Socal^{®} 31 (Imerys) |
| Flame retardant **FR** | Organophosphorus flame retarder | Disflamoll^{®} TOF (Lanxess) |
| Plasticizer **PL1** | Propylene glycol-initiated homopolymer diol | Voranol^{™} 220-110 Polyol (Dow) |
| Plasticizer **PL2** | Diisodecyl phthalate | Jayflex^{™} DIDP (Exxon) |
| Aminosilane **AS** | γ-aminopropyltrimethoxy silane | Silquest A-1110 (Momentive) |
| Drying agent **D** | Vinyltrimethoxy silane (VTML) | Silquest A-171 (Momentive) |
| Catalyst **C** | Dibutyltin dilaurate (DBTL) | Fascat^{®} 4202 (PMC Group) |

### Compositions used in Material Tests

Comparative examples, containing either reference organic polymer **RP** (E1) or phthalate-containing plasticizer (E2) or non-surface-modified chalk (E3), are identified in tables 2 to 3 by "(Ref.)".

**Table 2: Compositions used in material tests. Values are in wt.-% totaling 100%.**

| **Example compositions** | **E1** (Ref.) | **E2** (Ref.) | **E3** (Ref.) | **E4** |
|---|---|---|---|---|
| **RP** | 24.00 | - | - | - |
| **P** | - | 24.00 | 24.00 | 24.00 |
| **F1** | 36.00 | 36.00 | - | 36.00 |
| **F2** | - | - | 36.00 | - |
| **FR** | 30.00 | 30.00 | 30.00 | 30.00 |
| **PL1** | 6.60 | - | 6.60 | 6.60 |
| **PL2** | - | 6.60 | - | - |
| **AS** | 2.00 | 2.00 | 2.00 | 2.00 |
| **D** | 1.33 | 1.33 | 1.33 | 1.33 |
| **C** | 0.07 | 0.07 | 0.07 | 0.07 |

### Material Test

**Table 3: Material test showing improved adhesion for the inventive example.**

| **Test results** | | **E1** (Ref.) | **E2** (Ref.) | **E3** (Ref.) | **E4** |
|---|---|---|---|---|---|
| Adhesion | 1.5 g/m² | Medium | Medium | Bad | Good |
| | 3 g/m² | Bad | Bad | Bad | Good |

## Claims

1. A one-component moisture curable composition comprising
- at least one organic polymer **P1** containing reactive silane groups and a polyether backbone;
- at least one organic polymer **P2** containing reactive silane groups and an acrylate backbone;
- at least one surface-modified filler **F;**
- at least one plasticizer **PL** comprising a polymer having a polyether backbone;
- at least one flame retardant **FR;**
- at least one aminosilane **AS;**
- at least one drying agent **D;**
- at least one catalyst **C;**

2. The one-component composition according to preceding claim, wherein the backbone of the organic polymer **P1** is a polyether, in particular a polyoxyethylene, polyoxypropylene or polyoxy-propylenepolyoxyethlyene.

3. The one-component composition according to preceding claim, wherein the backbone of the organic polymer **P2** is an acrylate, in particular a alkyl(meth)acrylate, preferably a methyl(meth)acrylate, a (meth)acrylate or ethylene oxide adducts of (meth)acrylic acid.

4. The one-component composition according to the preceding claims,
wherein the surface-modified filler **F** is a surface-modified precipitated calcium carbonate (PCC) or surface-modified ground calcium carbonate (GCC).

5. The one-component composition according to the preceding claims,
wherein the plasticizer **PL** consisting of a polyether polyol, in particular a propylene glycol-initiated homopolymer diol.

6. The one-component composition according to the preceding claims, wherein the flame retardant **FR** is an organophosphorus compound, especially an trialkyl and/or triaryl phosphate.

7. The one-component composition according to the preceding claims,
wherein said aminosilane **AS** is according to formula (III) 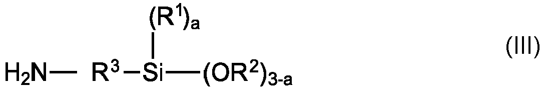 wherein
R¹ is a linear or branched, monovalent hydrocarbyl radical having 1 to 8 carbon atoms;
R² is a linear or branched, monovalent hydrocarbyl radical having 1 to 10 carbon atoms and which optionally contains one or more C-C multiple bonds, and/or cycloaliphatic, and/or aromatic moieties,
R³ is a divalent hydrocarbyl radical having 1 to 12 carbon atoms that optionally has one or more C-C multiple bonds, cyclic and/or aromatic moieties and optionally one or more heteroatoms, especially an amido, carbamate or morpholino group;
a is 0, 1 or 2, especially 0 or 1.
Preferably, R¹ is methyl or ethyl.

8. The one-component composition according to the preceding claims, wherein the drying agent **D** is an organoalkoxysilane, especially vinyltrimethoxysilane (VTML), tetraethoxysilane (TEOS), vinyltriethoxysilane (VTEO), propyltrimethoxysilane (PTMO), octyltrimethoxysilane (OCTMO), phenyltrimethoxysilane (PhTMO) or an organoalkoxysilane having a functional group in the α-position to the silane group, especially N-(methyldimethoxysilylmethyl)-O-methylcarbamate, (methacryloyloxymethyl)silane, and methoxymethylsilane.

9. The one-component composition according to the preceding claims, wherein the catalyst **C** is a tin-based catalyst, especially a diorganotin compound such as dibutyltin dilaurate (DBTL) or dioctyltin dilaurate (DOTL) or a zinc(II) complex with 1,3-diketonate ligands.

10. The one-component composition according to the preceding claims, **characterized in that** the composition comprises stabilizers **S,** especially hindered amine light stabilizers (HALS) and/or antioxidants, preferably hindered phenols.

11. The one-component composition according to the preceding claims, **characterized in that** the composition comprises additives **A,** especially pigments.

12. The one-component composition according to the preceding claims, wherein the cured composition passes the flammability test according to US standard UL 94 and reaches classification V1.

13. An article that was bonded, sealed or coated with the one-component composition according to preceding claims, especially a vehicle or a part of a vehicle, especially an electric vehicle, in particular a battery or parts of a battery in an electric vehicle.

14. Use of the one-component composition according to claims 1 to 12 to adhesively seal, coat or bond one or two or more identical or different substrates, wherein it is not required to pre-treat the surfaces prior to application, **characterized in that** the composition is preferably applied on metal surfaces, preferably on aluminum surfaces, especially oiled aluminum surfaces, preferably the substrate is an electric vehicle or part of an electric vehicle, more preferably a battery or parts of a battery in electric vehicles.

15. The one-component moisture curable composition, according to claim 1 to 12 **characterized in that** said composition comprises
- 5-20 wt.-% of organic polymer **P1** containing reactive silane groups and a polyether backbone;
- 5 - 20 wt.-% of organic polymer **P2** containing reactive silane groups and an acrylate backbone;
- 30 - 50 wt.-% of surface-modified filler **F;**
- 10 - 40 wt.-% of flame retardant **FR;**
- 2 - 15 wt.-% of plasticizer **PL** comprising a polymer having a polyether backbone;
- 1 - 5 wt.-% of aminosilane **AS;**
- 1 - 5 wt.-% of drying agent **D;**
- 0.01 - 0.1 wt.-% of catalyst **C;**
